# EUROPÄISCHE PATENTSCHRIFT

(11) **EP 3 860 803 B1**
(45) Veröffentlichungstag und Bekanntmachung des Hinweises auf die Patenterteilung: **18.05.2022**
(21) Anmeldenummer: 20701683.3
(22) Anmeldetag: 28.01.2020
(51) Int. Cl.: B23Q 7/02, B23Q 7/04, B65G 47/86

(54) **WERKZEUGMASCHINE MIT BELADEEINRICHTUNG**
MACHINE TOOL HAVING A LOADING DEVICE
MACHINE-OUTIL ÉQUIPÉE D'UN SYSTÈME DE CHARGEMENT

(30) Priorität: 29.01.2019 DE 102019102139
(43) Veröffentlichungstag der Anmeldung: 11.08.2021
(73) Patentinhaber: Thielenhaus Technologies GmbH, 42285 Wuppertal (DE)
(72) Erfinder: SCHWÄR, Rudolf, 79379 Müllheim-Vögisheim (DE)
(74) Vertreter: Feucker, Max Martin
(86) Internationale Anmeldenummer: PCT/EP2020/052008
(87) Internationale Veröffentlichungsnummer: WO 2020/157047

(56) Entgegenhaltungen:
- EP-A2- 3 205 446
- DE-A1-102010 021 983
- US-A- 3 627 146
- US-A1- 2005 235 788

## Beschreibung

Die vorliegende Erfindung betrifft eine Werkzeugmaschine zur Bearbeitung von Oberflächen von insbesondere rotationssymmetrischen und bevorzugt metallischen Werkstücken, umfassend wenigstens eine Bearbeitungsstation, wenigstens eine Beladestation und/oder Entladestation für die zu bearbeitenden beziehungsweise für die bearbeiteten Werkstücke und eine Beladeeinrichtung zum Überführen der Werkstücke von einer Station zu einer benachbarten Station (siehe z.B. US 2005/235788 A1).

Bei einer solchen Werkzeugmaschine werden die zu bearbeitenden Werkstücke in der Regel auf einer Transportbahn zu der Beladestation geführt, in der die Beladeeinrichtung das Werkstück ergreift. Hierzu weist die Beladeeinrichtung in der Regel mindestens zwei jeweils aktiv angetriebene Greifelemente auf. Das Werkstück wird sodann von der Beladeeinrichtung von der Beladestation abgehoben und in der Regel über eine Zentrierrolle hinüber in eine Bearbeitungsstation bewegt, wo die Beladeeinrichtung das Werkstück auf einen rotatorisch antreibbaren Werkstückhalter absenkt. Während der Bearbeitung des Werkstücks in der Bearbeitungsstation werden die Greifelemente aus der Bearbeitungsstation herausbewegt. Nach der Bearbeitung ergreifen die Greifelemente der Beladeeinrichtung das Werkstück erneut, heben es an und überführen es in eine weitere Bearbeitungsstation oder in die Entladestation. Aus der Entladestation kann das Werkstück sodann mittels der Transportbahn aus der Werkzeugmaschine heraustransportiert werden. Durch das Ergreifen, Anheben und Absenken der Werkstücke ist die Rüstzeit der Bearbeitungsstationen relativ lang. Zudem müssen die aktiv erzeugten Bewegungen der mehreren Greifelemente zum Greifen eines Werkstückes durch einen relativ hohen vorrichtungstechnischen und/oder steuerungstechnischen Aufwand aufeinander abgestimmt werden.

Aufgabe der vorliegenden Erfindung ist es daher, die mit Bezug zum Stand der Technik geschilderten Probleme zu lösen und insbesondere eine Werkzeugmaschine anzugeben, bei der die Rüstzeit der Werkzeugmaschine mit einem einfachen vorrichtungstechnischen Aufwand verkürzt ist.

Gelöst wird die Aufgabe durch eine Werkzeugmaschine mit den Merkmalen des unabhängigen Anspruchs. Vorteilhafte Weiterbildungen der Werkzeugmaschine sind in den abhängigen Ansprüchen und in der Beschreibung angegeben.

Gelöst wird die Aufgabe insbesondere durch eine Werkzeugmaschine mit den eingangs genannten Merkmalen, bei der die Beladeeinrichtung eine drehbar angetriebene Schiebeeinrichtung, einen Antrieb für die Schiebeeinrichtung, eine drehbar gelagerte Führungseinrichtung und eine Bremse für die Führungseinrichtung umfasst, wobei durch Antreiben der Schiebeeinrichtung ein Werkstück von der Schiebeeinrichtung zunächst gegen die Führungseinrichtung gedrückt und dann das Werkstück in Anlage mit der Schiebeeinrichtung und in Anlage mit der gebremsten und indirekt durch die Schiebeeinrichtung bewegten Führungseinrichtung auf einer Kreisbogenbahn von einer Station in eine benachbarte Station überführt wird.

Die Erfindung sieht in ihrem Grundgedanken also vor, dass zum Greifen des Werkstückes nur eine Einrichtung angetrieben werden muss, welche das Werkstück zwischen sich und der nicht aktiv direkt angetriebenen Führungseinrichtung zum Überführen des Werkstücks einklemmt. Es braucht daher auch nur ein Antrieb für die Schiebeeinrichtung vorgesehen sein, mit der die Schiebeeinrichtung zu einer Drehung angetrieben wird. Die Führungseinrichtung braucht hingegen nur drehbar gelagert sein und so ausgebildet sein, dass das Werkstück von der Schiebeeinrichtung gegen die Führungseinrichtung gedrückt wird. Es ist somit kein eigener Antrieb und somit auch keine mechanische oder elektronische Steuerung erforderlich, die die Schiebeeinrichtung mit der Führungseinrichtung koppelt. Das Werkstück kann somit auf einfache und schnelle Weise von einer Station (beispielsweise Bearbeitungsstation, Beladestation oder Entladestation) zu einer benachbarten Station überführt werden.

In einer Ausführungsform ist die von dem Werkstück ausgeführte Bewegungsbahn in Form eines Kreisbogens in einer horizontalen Ebene, so dass das Werkstück bei der Überführung von einer Station zu einer benachbarten Station nicht angehoben wird. Bei einer solchen Ausführungsform kann vorgesehen sein, dass die Bearbeitungsstation eine Zentrierrolle umfasst, welche während des Überführens des Werkstückes von einer Station zu einer benachbarten Station abgesenkt wird.

Bei dem Überführen des Werkstückes in einer horizontalen Ebene liegt das Werkstück in der Regel auf einer Auflagefläche der Werkzeugmaschine auf. Damit die Werkzeugmaschine für unterschiedliche Werkstücke eingesetzt werden kann, kann die Auflagefläche mindestens eine Aussparung aufweisen, in der beispielsweise mindestens eine Zentrierrolle oder ein anderes Element zur Halterung/Führung des Werkstückes während der Bearbeitung in der Bearbeitungsstation angeordnet werden kann. Aufgrund der Dimensionierung der Aussparung kann die Zentrierrolle in unterschiedlichen Positionen zu der Bearbeitungsstation angeordnet werden, wenn ein Werkstück mit anderen geometrischen Abmaßen als zuvor bearbeitet werden soll. Damit die Werkstücke auch bei verschiedenen Positionen der Zentrierrolle aufliegend von einer Station zu einer benachbarten Station überführt werden können, kann vorgesehen sein, dass in der Aussparung ein Auflageelement in unterschiedlichen Stellungen fixierbar ist, so dass das Auflageelement die Aussparung zumindest teilweise verschließt und das Werkstück im Bereich der Aussparung während des Überführens auf dem Auflageelement zumindest zeitweise aufliegt.

Damit in einer alternativen Ausführungsform die Zentrierrolle der Bearbeitungsstation nicht abgesenkt werden braucht, kann auch vorgesehen sein, dass die angetriebene Schiebeeinrichtung und die gebremste Führungseinrichtung während einer Überführung des Werkstückes eine axiale Auf- und Abbewegung ausführen, wodurch das Werkstück während der Überführung angehoben und wieder abgesenkt wird. In Draufsicht führt das Werkstück also während des Überführens weiterhin eine kreisbogenförmige Bewegung aus, während das Werkstück zusätzlich eine Auf- und Abbewegung in vertikaler Richtung ausführt. Auf diese Weise kann das Werkstück über zwischen den Stationen angeordnete Elemente gehoben werden.

Damit die Schiebeeinrichtung und die Führungseinrichtung eine Auf- und Abbewegung während der Drehbewegung ausführen, sind insbesondere Nocken(-paare) vorgesehen, die während der Drehbewegung der Schiebeeinrichtung und der Führungseinrichtung übereinander laufen, so dass die Einrichtungen insbesondere gemeinsam in vertikaler Richtung eine Aufund Abbewegung ausführen. Durch diese passiv erzeugte Auf- und Abbewegung ist ein Anheben des Werkstückes ohne zusätzlichen Antrieb für die Auf- und Abbewegung möglich. In diesem Fall sind die Schiebeeinrichtung und die Führungseinrichtung also nicht nur drehbar, sondern auch für die zum Anheben erforderliche Auf- und Abbewegung erforderliche Größenordnung axial bewegbar gelagert.

Bevorzugt sind die Schiebeeinrichtung und die Führungseinrichtung so ausgebildet, dass mehrere (mindestens zwei) Werkstücke gleichzeitig von unterschiedlichen Stationen zu einer jeweils benachbarten Station überführt werden können.

Die Werkzeugmaschine weist insbesondere eine Beladestation und zusätzlich eine Entladestation sowie mindestens eine Bearbeitungsstation, bevorzugt mindestens oder genau zwei oder sogar mindestens drei Bearbeitungsstationen auf.

Es ist insbesondere vorgesehen, dass die Schiebeeinrichtung und die Führungseinrichtung jeweils ein bevorzugt einteiliges Ladekreuz mit mehreren Armen aufweisen, wobei die Anzahl der Arme der Anzahl der Stationen der Werkzeugmaschine entspricht. Somit können also mehrere Werkstücke gleichzeitig von unterschiedlichen Stationen zu einer jeweils benachbarten Station überführt werden. Die Ladekreuze erstrecken sich bevorzugt in einer horizontalen Ebene.

Bevorzugt ist an jedem Arm der Schiebeeinrichtung ein auch als Schieber bezeichnetes Element angebracht, welches während der Überführung des Werkstückes mit dem Werkstück in Kontakt ist. Bevorzug ist dieser Schieber so ausgebildet, dass er nur an einer punktförmigen oder linienförmigen Kontaktstelle in Anlage mit dem rotationssymmetrischen Werkstück gelangt. Auf diese Weise ist es möglich, dass ein Schieber für unterschiedliche Werkstückabmessungen und/oder -geometrien eingesetzt wird, da der Schieber aufgrund seiner punkt- beziehungsweise linienförmigen Anlage nicht an die Werkstückgeometrie angepasst werden muss.

Die Führungseinrichtung umfasst zur Anlage des Werkstückes bevorzugt jeweils ein Aufnahmeprisma, welches insbesondere an dem Arm der Führungseinrichtung gelagert ist, wobei das Aufnahmeprisma an genau zwei punktförmigen oder linienförmigen Kontaktstellen in Anlage mit dem Werkstück gelangt. Ein solches Aufnahmeprisma weist insbesondere zwei in einem Winkel zueinander angeordnete Anlageflächen auf, so dass das Aufnahmeprisma für insbesondere sich in ihrem Durchmesser unterscheidende unterschiedliche Werkstücke verwendet werden kann.

Das Aufnahmeprisma ist bevorzugt schwenkbar an dem Arm der Führungseinrichtung gelagert, so dass das Aufnahmeprisma in Abhängigkeit des Durchmessers des zu überführenden Werkstückes unterschiedliche Schwenkstellungen einnehmen kann. In Kombination mit dem nur an einem Punkt oder einer Linie mit dem Werkstück in Anlage kommenden Schieber ist somit ein sich an das Werkstück anpassendes, bestimmtes Dreipunktsystem gegeben, welches unabhängig von den Abmessungen der Werkstücke für unterschiedliche Werkstücke eingesetzt werden kann. Es ist somit nicht notwendig, die Beladeeinrichtung aufwendig umzubauen, wenn die Werkzeugmaschine für die Bearbeitung von Werkstücken mit anderen Abmessungen umgerüstet wird. Insbesondere ist an jedem Arm der Führungseinrichtung ein Aufnahmeprisma angeordnet.

Das Aufnahmeprisma ist insbesondere mittels zweier bogenförmiger Langlöcher schwenkbar gelagert, wobei jeweils ein Stift in jedes Langloch eingreift. Die Langlöcher können unmittelbar in dem Aufnahmeprisma ausgebildet sein, während die Stifte an dem jeweiligen Arm ausgebildet sind. Eine umgekehrte Anordnung ist auch möglich. Auf diese Weise ist eine einfache Schwenklagerung erzielt, wobei die Langlöcher beziehungsweise die Stifte exzentrisch an dem Aufnahmeprisma angeordnet sind.

Das Ladekreuz der Schiebeeinrichtung ist bevorzugt direkt mit einer Antriebswelle eines Elektromotors als Antrieb für die Schiebeeinrichtung gekoppelt, so dass die Rotation der Antriebswelle bevorzugt unmittelbar in eine Drehbewegung des Ladekreuzes übersetzt wird. Die Drehbewegung des Ladekreuzes der Schiebeeinrichtung ist zunächst von dem Ladekreuz der Führungseinrichtung entkoppelt. Erst wenn das Ladekreuz der Führungseinrichtung mittelbar über das zwischen dem Ladekreuz der Schiebeeinrichtung und dem Ladekreuz der Führungseinrichtung angeordnete Werkstück angetrieben wird, erfolgt eine Bewegung des Ladekreuzes der Führungseinrichtung. In einer bevorzugten Ausführungsform ist das Ladekreuz der Schiebeeinrichtung oberhalb oder unterhalb des Ladekreuzes der Führungseinrichtung angeordnet.

Die Bremse der Führungseinrichtung ist so ausgebildet, dass die von der Schiebeeinrichtung beschleunigte Führungseinrichtung ohne weitere Beschleunigung durch die Schiebeeinrichtung umgehend zum Stillstand gelangt. Die Bremseinrichtung kann beispielsweise als Tellerfederbremse ausgebildet sein, die auf das Ladekreuz der Führungseinrichtung wirkt.

Die wenigstens eine Bearbeitungsstation ist bevorzugt zur Endbearbeitung, die auch als Finish- oder Microfinishbearbeitung bekannt ist, eingerichtet. So weist die Bearbeitungsstation insbesondere eine drehbar antreibbare Werkstückhalterung und eine Werkzeughalterung auf, wobei die Werkzeughalterung und die Werkstückhalterung bevorzugt eine Oszillationsbewegung zueinander ausführen können, die insbesondere quer zu der Drehbewegung des Werkstückes beziehungsweise parallel zur Drehachse des Werkstückes ausgerichtet ist. Somit ist eine sogenannte Langhub-und/oder Kurzhubhonbearbeitung des Werkstückes möglich. Insbesondere werden radial ausgerichtete Innen- oder Außenflächen des Werkstückes mittels Werkzeugen bearbeitet. So können die Bearbeitungsstationen insbesondere zur Bearbeitung von Wälzlagerringen eingerichtet sein. Die für die Finishbearbeitung eingesetzten Werkzeuge weisen geometrisch unbestimmte Schneiden auf, bei denen die Schneidstoffe in einem Bindungswerkstoff gebunden sind.

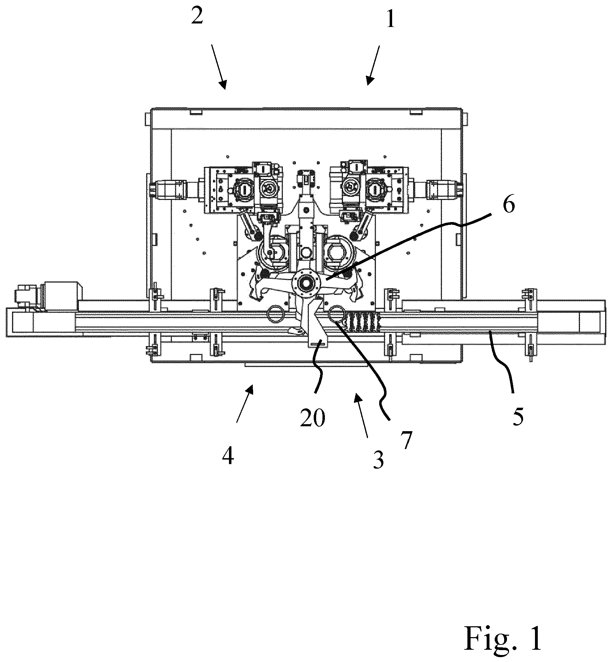

Die Erfindung sowie das technische Umfeld werden im Folgenden anhand der Figuren beispielhaft erläutert. Die Figuren zeigen schematisch
- Figur 1:: eine Draufsicht auf die Werkzeugmaschine,
- Figur 2:: eine detailliertere Draufsicht auf die Werkzeugmaschine in einer Ladeposition,
- Figur 3:: die Draufsicht gemäß Figur 2 in einer Spannposition und
- Figur 4:: eine vertikale Schnittansicht durch die Werkzeugmaschine.

Die in den Figuren dargestellte Werkzeugmaschine umfasst eine erste Bearbeitungsstation 1, eine zweite Bearbeitungsstation 2, eine Beladestation 3 und eine Entladestation 4, wobei die zu bearbeitenden Werkstücke 7 mittels einer Transportbahn 5 zu der Beladestation 3 transportiert werden und die bearbeiteten Werkstücke 7 von der Transportbahn 5 aus der Werkzeugmaschine heraustransportiert werden. Um die von der Transportbahn 5 zugeführten Werkstücke 7 in der Beladestation 3 zu halten ist ein Anschlagprisma 20 vorgesehen.

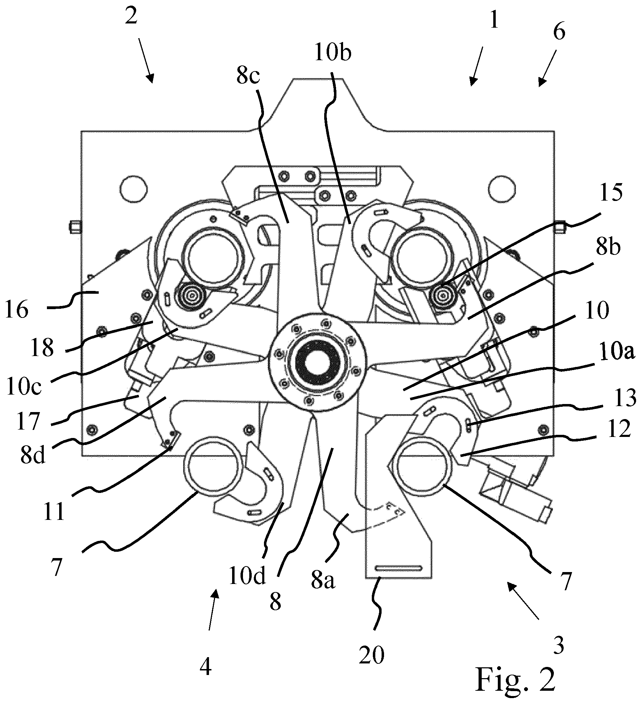

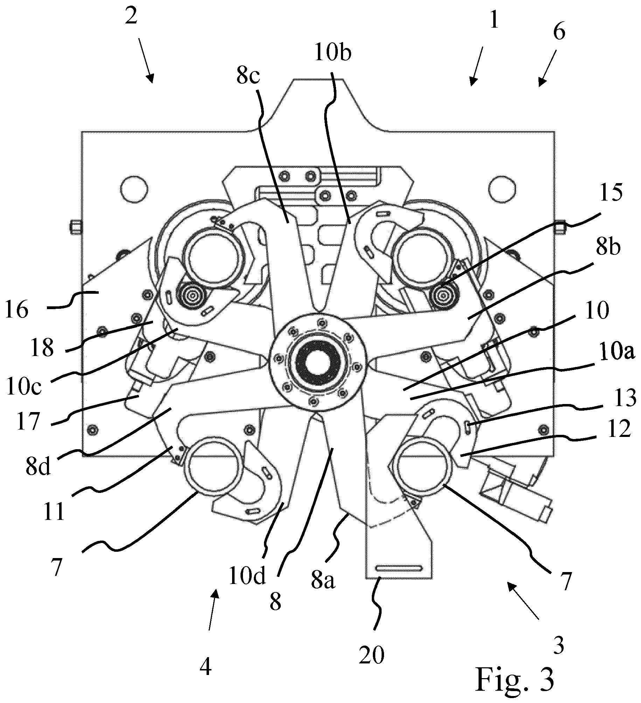

Die Werkzeugmaschine umfasst ferner eine Beladeeinrichtung 6, die in den Figuren 2 und 3 im Detail und in unterschiedlichen Positionen dargestellt ist.

Die Beladeeinrichtung 6 umfasst eine als Ladekreuz ausgebildete Schiebeeinrichtung 8 mit vier Armen 8a, 8b, 8c, 8d. Ferner umfasst die Beladeeinrichtung 6 eine ebenfalls als Ladekreuz ausgebildete Führungseinrichtung 10 mit vier Armen 10a, 10b, 10c, 10d. An jedem Arm 8a, 8b, 8c, 8d der Schiebeeinrichtung 8 ist ein Schieber 11 angeordnet, während an jedem Arm 10a, 10b, 10c, 10d der Führungseinrichtung 10 ein Aufnahmeprisma 12 angeordnet ist. Das Aufnahmeprisma 12 ist jeweils mittels zweier bogenförmiger Langlöcher 13 schwenkbar an dem jeweiligen Arm 10a, 10b, 10c, 10d der Führungseinrichtung 10 gelagert.

Die Werkzeugmaschine weist zudem Auflageflächen 16 auf, in denen Aussparungen 17 ausgebildet sind. In den Aussparungen 17 sind Auflageelemente 18 angeordnet, die in unterschiedlichen Stellungen festlegbar sind.

Zudem weisen die Bearbeitungsstationen 1 und 2 jeweils eine Zentrierrolle 15 auf.

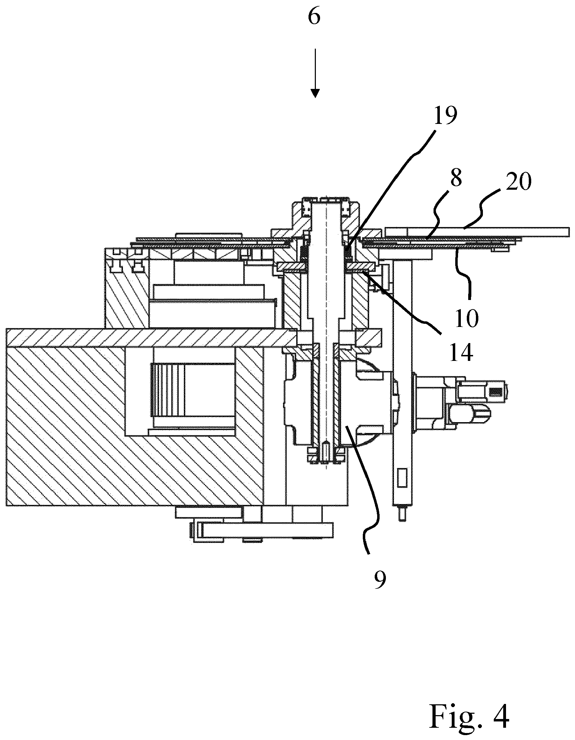

Wie insbesondere aus der Figur 4 hervorgeht, wird die Schiebeeinrichtung 8 mittels eines Antriebs 9 aktiv angetrieben, während die drehbar gelagerte Führungseinrichtung 10 mittels einer beispielsweise als Tellerfederbremse ausgebildeten Bremse 19 passiv gebremst wird. Zwischen der Führungseinrichtung 10 und einer die Antriebswelle des Antriebs 9 umgebenden Hülse können Nocken 14 ausgebildet sein, die eine Auf- und Abbewegung der Schiebeeinrichtung 8 und der Führungseinrichtung 10 während der Drehbewegung bedingen.

In Figur 2 ist nun eine Ladeposition der Beladeeinrichtung 6 dargestellt, in der die Arme 8a, 8b, 8c, 8d mit ihren Schiebern 11 beziehungsweise die Arme 10a, 10b, 10c, 10d mit ihren Aufnahmeprismen 12 von dem jeweiligen Werkstück 7 beabstandet sind. Zum Greifen der Werkstücke 7 wird nun mittels des Antriebs 9 ausschließlich die Schiebeeinrichtung 8 angetrieben, wodurch das jeweilige Werkstück 7 von dem Schieber 11 des jeweiligen Armes 8a, 8b, 8c, 8d zunächst gegen das Aufnahmeprisma 12 des jeweiligen Arms 10a, 10b, 10c, 10d der Führungseinrichtung 10 gedrückt wird. Durch den Schieber 11 und das jeweilige Prisma 12 werden drei punkt- oder linienförmige Anlagepunkte definiert, so dass das Werkstück 7 bestimmt eingeklemmt ist. Durch einen weiteren Antrieb der Schiebeeinrichtung 8 wird das jeweilige Werkstück 7 entgegen dem Uhrzeigersinn auf einer Kreisbogenbahn in die nächste Station überführt, wobei die Schiebeeinrichtung 8 und die Führungseinrichtung 10 aufgrund der übereinander laufenden Nocken 14 während der Drehbewegung gemeinsam auf- und abbewegt werden, wodurch die Werkstücke 7 angehoben und somit über die Zentrierrollen 15 gehoben werden. Alternativ wäre es möglich, die Zentrierrollen 15 abzusenken, wenn die Werkstücke überführt werden.

Während des Überführens der Werkstücke 7 zu benachbarten Stationen wird die Führungseinrichtung 10 nur indirekt über die Schiebeeinrichtung 8 angetrieben, wobei die durch die Bremse 19 verursachte Bremskraft überwunden wird. Nachdem der Antrieb 9 durch die Schiebeeinrichtung 8 beendet ist, verbleibt die Führungseinrichtung 10 in ihrer durch die Schiebeeinrichtung 8 zuvor vorgegebenen Stellung.

Nach Erreichen der nächsten Station wird die Schiebeeinrichtung 8 in entgegengesetzte Richtungen angetrieben, so dass die Werkstücke 7 freigegeben werden. Nachdem die Werkstücke 7 in den Bearbeitungsstationen 1 und 2 bearbeitet sind, folgt ein neuer Be- und Entladevorgang.

Mit der vorliegenden Erfindung ist auf einfache Weise eine Überführung der Werkstücke von einer Station zu einer benachbarten Station mit kurzen Rüstzeiten möglich.

### Bezugszeichenliste

- 1: erste Bearbeitungsstation
- 2: zweite Bearbeitungsstation
- 3: Beladestation
- 4: Entladestation
- 5: Transportbahn
- 6: Beladeeinrichtung
- 7: Werkstück
- 8: Schiebeeinrichtung
- 8a, 8b, 8c, 8d: Arme
- 9: Antrieb
- 10: Führungseinrichtung
- 10a, 10b, 10c, 10d: Arme
- 11: Schieber
- 12: Aufnahmeprisma
- 13: Langloch
- 14: Nocken
- 15: Zentrierrolle
- 16: Auflagefläche
- 17: Aussparung
- 18: Auflageelement
- 19: Bremse
- 20: Anschlagprisma

## Patentansprüche

1. Werkzeugmaschine zur Bearbeitung von Oberflächen von insbesondere rotationssymmetrischen Werkstücken (7), umfassend
- wenigstens eine Bearbeitungsstation (1, 2),
- wenigstens eine Beladestation (3) für die zu bearbeitenden Werkstücke (7) und/oder eine Entladestation (4) für die bearbeiteten Werkstücke,
- eine Beladeeinrichtung (6) zum Überführen der Werkstücke (7) von einer Station (1, 2, 3, 4) zu einer benachbarten Station (1, 2, 3, 4),
**dadurch gekennzeichnet, dass** die Beladeeinrichtung (6)
- eine drehbar angetriebene Schiebeeinrichtung (8),
- einen Antrieb (9) für die Schiebeeinrichtung (8) und
- eine drehbar gelagerte Führungseinrichtung (10) und
- eine Bremse (19) für die Führungseinrichtung umfasst,
wobei durch Antreiben der Schiebeeinrichtung (8) ein Werkstück (7) von der Schiebeeinrichtung (8) zunächst gegen die Führungseinrichtung (10) gedrückt und dann das Werkstück (7) in Anlage mit der Schiebeeinrichtung (8) und in Anlage mit der gebremsten und indirekt durch die Schiebeeinrichtung (8) bewegten Führungseinrichtung (10) auf einer Kreisbogenbahn von einer Station (1, 2, 3, 4) in eine benachbarte Station (1, 2, 3, 4) überführt wird.

2. Werkzeugmaschine nach Anspruch 1, wobei die Schiebeeinrichtung (8) und die Führungseinrichtung (10) jeweils mehrere Arme (8a, 8b, 8c, 8d und 10a, 10b, 10c, 10d) aufweisen.

3. Werkzeugmaschine nach Anspruch 1 oder 2, wobei die Schiebeeinrichtung (8) an genau einer punktförmigen oder linienförmigen Kontaktstelle in Anlage mit dem rotationssymmetrischen Werkstück (7) bringbar ist.

4. Werkzeugmaschine nach einem der vorhergehenden Ansprüche, wobei die Führungseinrichtung (10) mindestens einen Arm (10a, 10b, 10c, 10d) und ein an dem Arm (10a, 10b, 10c, 10d) gelagertes Aufnahmeprisma (12) aufweist, wobei das Aufnahmeprisma (12) an genau zwei punktförmigen oder linienförmigen Kontaktstellen in Anlage mit dem rotationssymmetrischen Werkstück (7) bringbar ist.

5. Werkzeugmaschine nach Anspruch 4, wobei das Aufnahmeprisma (12) schwenkbar an dem Arm (10a, 10b, 10c, 10d) der Führungseinrichtung (10) gelagert ist.

6. Werkzeugmaschine nach Anspruch 5, wobei die Schwenklagerung des Aufnahmeprismas (12) durch mindestens zwei Langlöcher (13) realisiert ist.

7. Werkzeugmaschine nach einem der vorhergehenden Ansprüche, wobei die Schiebeeinrichtung (8) und/oder die Führungseinrichtung (10) so eingerichtet sind, dass das Werkstück (7) während einer Überführung angehoben wird.

8. Werkzeugmaschine nach Anspruch 7, wobei Nocken (14) zur Erzeugung einer Auf- und Abbewegung der Schiebeeinrichtung (8) und der Führungseinrichtung (10) vorgesehen sind.

9. Werkzeugmaschine nach einem der vorhergehenden Ansprüche, wobei die wenigstens eine Bearbeitungsstation (1, 2) eine Zentrierrolle (15) umfasst und wobei die Zentrierrolle (15) absenkbar ist.

10. Werkzeugmaschine nach einem der vorhergehenden Ansprüche, wobei zwischen zwei benachbarten Stationen (1, 2, 3, 4) mindestens eine Auflagefläche (16) für das Werkstück (7) während der Überführung ausgebildet ist und wobei die Auflagefläche (16) mindestens eine Aussparung aufweist, in der ein in unterschiedlichen Stellungen fixierbares Auflageelement (18) angeordnet ist.

## Claims

1. A machine tool for machining surfaces of in particular rotationally symmetrical workpieces (7), comprising
- at least one machining station (1, 2),
- at least one loading station (3) for the workpieces (7) to be machined and/or an unloading station (4) for the machined workpieces,
- a loading device (6) for transferring the workpieces (7) from one station (1, 2, 3, 4) to an adjacent station (1, 2, 3, 4),
**characterized in that** the loading device (6) comprises
- a rotatably driven sliding device (8),
- a drive (9) for the sliding device (8) and
- a rotatably mounted guiding device (10) and
- a brake (19) for the guiding device,
wherein driving the sliding device (8) initially causes a workpiece (7) to be pressed by the sliding device (8) against the guiding device (10), after which the workpiece (7) abutting against the sliding device (8) and abutting against the braked guiding device (10) indirectly moved by the sliding device (8) is transferred onto a circular arc track from one station (1, 2, 3, 4) into an adjacent station (1, 2, 3, 4).

2. The machine tool according to claim 1, wherein the sliding device (8) and guiding device (10) each have several arms (8a, 8b, 8c, 8d and 10a, 10b, 10c, 10d).

3. The machine tool according to claim 1 or 2, wherein the sliding device (8) can be made to abut against the rotationally symmetrical workpiece (7) at exactly one punctiform or line-shaped contact place.

4. The machine tool according to one of the preceding claims, wherein the guiding device (10) has at least one arm (10a, 10b, 10c, 10d) and one receiving prism (12) mounted on the arm (10a, 10b, 10c, 10d), wherein the receiving prism (12) can be made to abut against the rotationally symmetrical workpiece (7) at exactly two punctiform or line-shaped contact place.

5. The machine tool according to claim 4, wherein the receiving prism (12) is pivotably mounted on the arm (10a, 10b, 10c, 10d) of the guiding device (10).

6. The machine tool according to claim 5, wherein the pivot bearing of the receiving prism (12) is realized by at least two oblong holes (13).

7. The machine tool according to one of the preceding claims, wherein the sliding device (8) and/or guiding device (10) are set up in such a way that the workpiece (7) is lifted during a transfer.

8. The machine tool according to claim 7, wherein cams (14) are provided for generating an up and down movement of the sliding device (8) and guiding device (10).

9. The machine tool according to one of the preceding claims, wherein the at least one machining station (1, 2) comprises a centering roller (15), and wherein the centering roller (15) can be lowered.

10. The machine tool according to one of the preceding claims, wherein at least one support surface (16) for the workpiece (7) is formed between two adjacent stations (1, 2, 3, 4) during the transfer, and wherein the support surface (16) has at least one recess, in which a support element (18) fixable in different positions is arranged.

## Revendications

1. Machine-outil, destinée à usiner des surfaces, de pièces à usiner (7) notamment symétriques en rotation, comprenant
- au moins un poste d'usinage (1, 2),
- au moins un poste de chargement (3) des pièces (7) qui doivent être usinées et / ou un poste de déchargement (4) des pièces qui ont été usinées,
- un dispositif de chargement (6), destiné à transférer les pièces à usiner (7) d'un poste (1, 2, 3, 4) à un poste (1, 2, 3, 4) voisin,
**caractérisée en ce que** le dispositif de chargement (6) comprend
- un dispositif pousseur (8) entraîné en rotation,
- un entraînement (9) pour le dispositif pousseur (8) et
- un dispositif de guidage (10) logé en rotation, et
- un frein (19) pour le dispositif de guidage,
par entraînement du dispositif pousseur (8), une pièce à usiner (7) étant d'abord pressée par le dispositif pousseur (8) contre le dispositif de guidage (10) et ensuite, la pièce à usiner (7) étant en appui sur le dispositif pousseur (8) et en appui sur le dispositif de guidage (10) freiné et indirectement déplacé par le dispositif pousseur (8) étant transférée sur une trajectoire en arc de cercle, d'un poste (1, 2, 3, 4) vers un poste (1, 2, 3, 4) voisin.

2. Machine-outil selon la revendication 1, le dispositif pousseur (8) et le dispositif de guidage (10) comportant chacun plusieurs bras (8a, 8b, 8c, 8d et 10a, 10b, 10c, 10d).

3. Machine-outil selon la revendication 1 ou 2, sur précisément un point de contact de forme ponctuelle ou linéaire, le dispositif pousseur (8) étant susceptible d'être amené en appui avec la pièce à usiner (7) symétrique en rotation.

4. Machine-outil selon l'une quelconque des revendications précédentes, le dispositif de guidage (10) comportant au moins un bras (10a, 10b, 10c, 10d)) et un prisme de préhension (12) logé sur le bras (10a, 10b, 10c, 10d), sur précisément deux points de contact de forme ponctuelle ou linéaire, le prisme de préhension (12) étant susceptible d'être amené en appui avec la pièce à usiner (7) symétrique en rotation.

5. Machine-outil selon la revendication 4, le prisme de préhension (12) étant logé de manière pivotante sur le bras (10a, 10b, 10c, 10d) du dispositif de guidage (10).

6. Machine-outil selon la revendication 5, le logement en pivotement du prisme de préhension (12) étant réalisé par au moins deux trous oblongs (13).

7. Machine-outil selon l'une quelconque des revendications précédentes, le dispositif pousseur (8) et/ou le dispositif de guidage (10) étant aménagés de telle sorte que la pièce à usiner (7) soit relevée pendant un transfert.

8. Machine-outil selon la revendication 7, des cames (14) étant prévues pour générer un déplacement vers le haut et vers le bas du dispositif pousseur (8) et du dispositif de guidage (10).

9. Machine-outil selon l'une quelconque des revendications précédentes, l'au moins un poste d'usinage (1, 2) comprenant un galet centreur (15) et le galet centreur (15) étant abaissable.

10. Machine-outil selon l'une quelconque des revendications précédentes, entre deux postes (1, 2, 3, 4) voisins étant conçue au moins une surface de soutien (16) pour la pièce à usiner (7) pendant le transfert et la surface de soutien (16) comportant au moins une encoche, dans laquelle est placé un élément de soutien (18), susceptible d'être fixé dans différentes positions.
